# EUROPÄISCHE PATENTSCHRIFT

(11) **EP 1 290 432 B1**
(45) Veröffentlichungstag und Bekanntmachung des Hinweises auf die Patenterteilung: **25.10.2006**
(21) Anmeldenummer: 01947193.7
(22) Anmeldetag: 08.06.2001
(51) Int. Cl.: G01N 27/406

(54) **VORRICHTUNG ZUM MESSEN DES INNENWIDERSTANDES EINER LINEAREN LAMBDASONDE**
DEVICE FOR MEASURING THE INTERNAL RESISTANCE OF A LINEAR LAMBDA PROBE
DISPOSITIF POUR MESURER LA RESISTANCE INTERNE D'UNE SONDE LAMBDA LINEAIRE

(30) Priorität: 16.06.2000 DE 10029795
(43) Veröffentlichungstag der Anmeldung: 12.03.2003
(73) Patentinhaber: SIEMENS AKTIENGESELLSCHAFT, 80333 München (DE)
(72) Erfinder: BOLZ, Stephan, 93102 Pfatter (DE)
(86) Internationale Anmeldenummer: PCT/DE2001/002138
(87) Internationale Veröffentlichungsnummer: WO 2001/096848

(56) Entgegenhaltungen:
- US-A- 4 419 190
- US-A- 4 505 783
- US-A- 5 106 481

## Beschreibung

Die Erfindung betrifft eine Vorrichtung zum Messen des Innenwiderstandes einer linearen Lambdasonde einer Brennkraftmaschine nach dem Oberbegriff von Anspruch 1.

Der dynamische Widerstand der Diffusionsbarriere einer linearen Lambdasonde, die im Abgastrakt einer Brennkraftmaschine zur Ermittlung des der Brennkraftmaschine zugeführten Kraftstoff-Luft-Gemischs angeordnet ist, weist eine Temperaturabhängigkeit auf, was zu Fehlern im Übersetzungsverhältnis, d.h., im Meßergebnis führt. Man begegnet dem durch Messung der Sondentemperatur und deren Regelung auf einen konstanten Wert mittels eines in der Lambdasonde eingebauten Heizelementes. Aus Kostengründen wird dabei auf ein separates Thermoelement zur Temperaturmessung verzichtet; man mißt statt dessen den stark temperaturabhängigen Innenwiderstand Ris der Lambdasonde.

Ein gängiges Meßverfahren zur Bestimmung des Innenwiderstandes Ris ist die Beaufschlagung der Sonde mit einem mittels eines Rechteckoszillators gewonnenen Wechselstrom. Am Innenwiderstand Ris fällt dann eine Wechselspannung ab. Diese Wechselspannung wird verstärkt und gleichgerichtet und kann einem Mikroprozessor zur Temperaturregelung zugeführt werden.

Aus diesem Meßverfahren resultiert eine Verfälschung des Ausgangssignals bei Dachschräge des Rechtecksignals (beispielsweise wegen zu kleiner Koppelkondensatoren oder Rückwirkungen aus der Sondenregelschleife), und es besteht eine starke Empfindlichkeit gegenüber EMV-Störungen, bedingt durch das rasche Ansprechen des Gleichrichters.

Die Patentschrift US-5106481 offenbart eine Vorrichtung zur Messung des Innenwiderstandes einer Lambdasonde mit einem Synchrondemodulator.

Es ist Aufgabe der Erfindung, eine Vorrichtung zum Messen des Innenwiderstandes einer linearen Lambdasonde zu schaffen, mittels welcher eine genauere Messung des Innenwiderstandes ermöglicht wird, und bei welcher der bei der Gleichrichtung des Wechselspannungssignals entstehende Meßfehler und die Empfindlichkeit gegen elektromagnetische Störimpulse reduziert wird.

Diese Aufgabe wird erfindungsgemäß durch die Merkmale des Anspruchs 1 gelöst. Das wesentliche Merkmal nach der Erfindung ist der Einsatz eines Synchrondemodulators mit integrierter Siebung zur Gleichrichtung des Sensorausgangssignals.

Nachstehend wird ein Ausführungsbeispiel der Erfindung anhand einer schematischen Zeichnung näher beschrieben.

In der Zeichnung zeigen:
- Figur 1: ein Diagramm über die Abhängigkeit des Sondeninnenwiderstandes Ris von der Temperatur,
- Figur 2: ein Ersatzschaltbild des Innenwiderstandes Ris,
- Figur 3: ein Prinzipschaltbild eines Spitzenwertgleichrichters,
- Figur 4: Ein- und Ausgangssignale des Spitzenwertgleichrichters,
- Figur 5: ein Prinzipschaltbild einer bekannten Schaltung zur Ermittlung des Sondeninnenwiderstandes Ris mit einem Spitzenwertgleichrichter,
- Figur 6: Ein- und Ausgangssignale des Synchrondemodulators mit integrierter Siebung,
- Figur 7: ein Ausführungsbeispiel eines Synchrondemodulators mit integrierter Siebung,
- Figur 8a: das Ersatzschaltbild einer Lambdasonde,
- Figur 8b: ein Prinzipschaltbild einer erfindungsgemäßen Schaltung zur Ermittlung des Sondeninnenwiderstandes Ris mit einem Synchrondemodulator mit integrierter Siebung, und
- Figur 9: einen Vergleich der Störempfindlichkeiten der bekannten und der erfindungsgemäßen Schaltung.

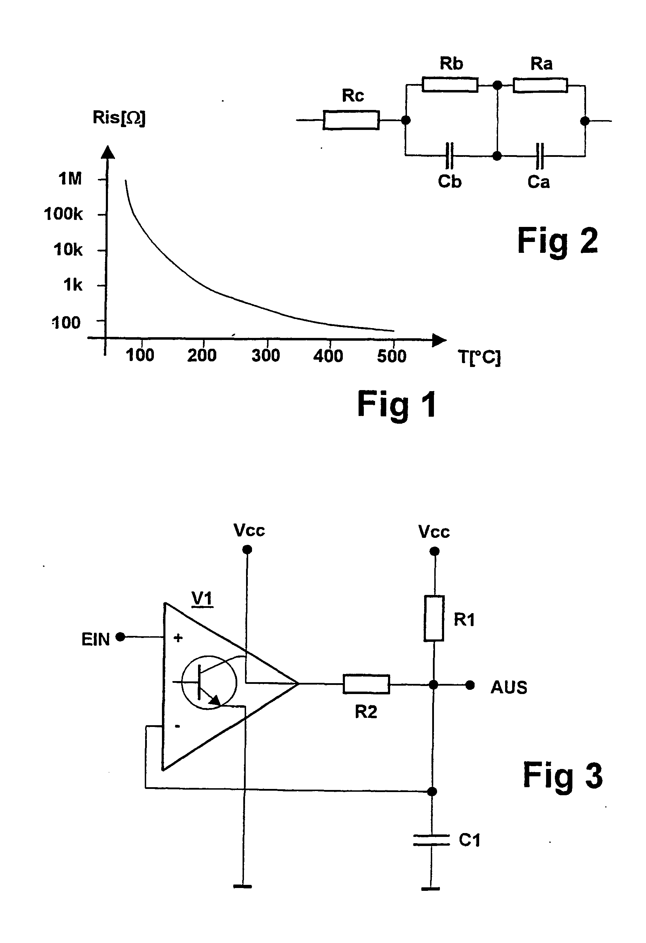

Ein Ersatzschaltbild eines Sondeninnenwiderstandes Ris einer Lambdasonde, dessen Temperaturabhängigkeit in Figur 1 dargestellt ist, läßt sich als komplexe Reaktanz, bestehend aus der Reihenschaltung eines ersten Widerstandes Ra, dem ein erster Kondensator Ca parallelgeschaltet ist, eines zweiten Widerstandes Rb, dem ein zweiter Kondensator Cb parallelgeschaltet ist, und eines dritten Widerstandes Rc darstellen, siehe Figur

Dabei repräsentiert
- Ra/Ca:: den Übergangswiderstand zwischen Elektroden und Keramikmaterial (die Zeitkonstante τa = Ra*Ca beträgt typisch ca. 10ms),
- Rb/Cb:: den Übergang zwischen den Korngrenzen der Keramiksinterkörner (die Zeitkonstante τb = Rb*Cb beträgt typisch ca. 100µs), und
- Rc:: den Eigenwiderstand des Sintermaterials.

Der Widerstand Ra ist stark alterungsabhängig; er kann also zur Temperaturmessung nicht herangezogen werden. Die Reihenschaltung von Rb/Cb und Ra ergibt bei einer Meßfrequenz von 3 kHz einen Widerstandswert von ca 100Ω. Dies ist der zu messende Sondeninnenwiderstand Ris.

Bei dem bereits erwähnten gängigen Meßverfahren zur Bestimmung des Sondeninnenwiderstandes Ris wird die Sonde mit einem Wechselstrom - beispielsweise 500µAss (Spitze-Spitze) - beaufschlagt. Am Innenwiderstand Ris entsteht dann eine Wechselspannung von 500µAss*1000hm = 50mVss. Diese Wechselspannung wird verstärkt und gleichgerichtet und kann dann einem Mikroprozessor zur Temperaturregelung zugeführt werden.

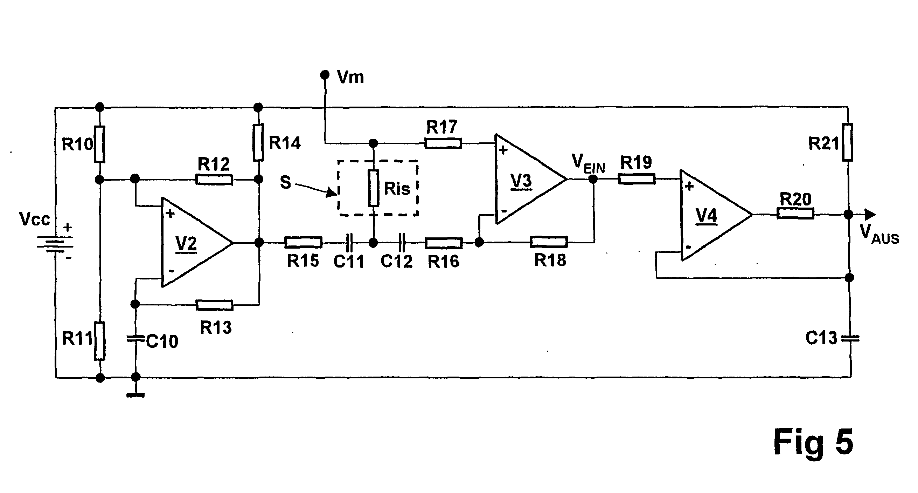

Die Erzeugung des Wechselstromes erfolgt beispielsweise mittels eines 3kHz-Rechteckoszillators, der mit Vcc=5V versorgt wird. Über einen hochohmigen Widerstand (10kΩ) und einen Entkoppelkondensator wird das Signal der Sonde zugeleitet. Figur 5 zeigt einen bekannten, typischen Schaltungsaufbau dazu, der später erklärt wird.

Bei der bekannten Schaltung wird ein Spitzenwertgleichrichter zur Wandlung des Wechselspannungssignals in eine Gleichspannung verwendet, dessen Prinzipschaltbild in Figur 3 dargestellt ist.

Am Eingang EIN liege beispielsweise eine Gleichspannung Vm = 2.5V. Der Komparator V1 arbeitet als Spannungsfolger, deshalb beträgt die Spannung am Ausgang AUS ebenfalls 2.5V. Dies wird erreicht, indem sich der Kondensator C1 über den Widerstand R1 langsam auflädt. Solange die Spannung am Ausgang AUS kleiner als die Spannung am Eingang EIN ist, bleibt der Ausgangstransistor des Komparators V1 nichtleitend.

Übersteigt die Ausgangsspannung die Eingangsspannung, so schaltet der Transistor ein und entlädt den Kondensator C1 über Widerstand R2, bis die Ausgangsspannung wieder unter der Eingansspannung liegt. Dann wird der Transistor wieder nicht-leitend und die Ausgangsspannung steigt, getrieben durch den Ladestrom von R1, langsam wieder an.

Es entsteht eine Pendelschwingung um V_{AUS} = Vm. Wichtig ist dabei, daß die Zeitkonstanten zum Laden (τ_{lade} = R1*C1) und zum Entladen (τ_{entlade} = R2*C1) des Kondensators C1 stark unterschiedlich sind. In einer realen Schaltung wählt man das Verhältnis τ_{lade}/τ_{entlade} etwa 100/1.

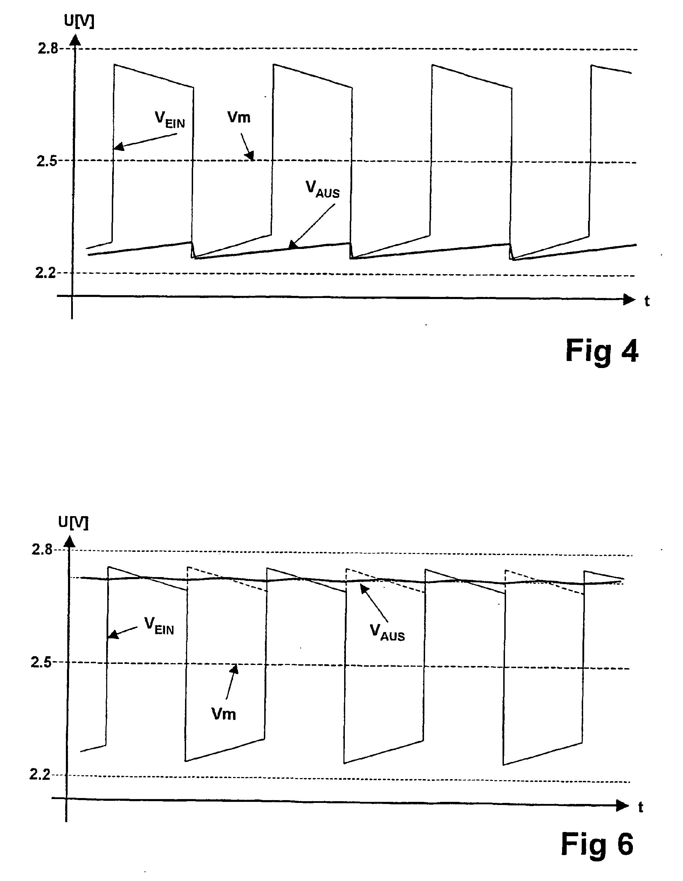

Liegt nun, siehe Figur 4, am Eingang EIN eine vom temperaturabhängigen Innenwiderstand Ris abhängige Rechteck-Wechselspannung V_{EIN} von beispielsweise 500mVss an, die der Gleichspannung Vm = 2.5V überlagert ist, so wird das Ausgangssignal V_{AUS} sehr schnell dem unteren Spitzenwert des Eingangssignals V_{EIN} folgen und nur langsam wieder ansteigen. Am Ausgang AUS entsteht so eine - dick ausgezogene - (Sägezahn-)Gleichspannung V_{AUS}, die dem unteren Spitzenwert der Eingangsspannung Vm + V_{EIN} folgt.

Der Gleichrichter wandelt das Wechselspannungssignal V_{EIN} = 500mVss = ±250mV in ein Gleichspannungssignal um: V_{AUS} =-250mV. Der Nullpunkt liegt bei Vm = 2.5V. Das Ausgangssignal beträgt also im Mittel: Vm - 0.250V = 2.250V.

In Figur 5 ist ein bekannter, typischer Schaltungsaufbau zur Ermittlung des Sondeninnenwiderstandes mittels eines Spitzengleichrichters gezeigt.

Die Operationsverstärker V2, V3 und V4 werden in nicht dargestellter Weise von der Versorgungsspannung Vcc = 5V gespeist. Der Operationsverstärker V2 bildet mit den Widerständen R10 bis R14 und dem Kondensator C10 einen Rechteckoszillator mit einer Ausgangsfrequenz von etwa 3kHz.

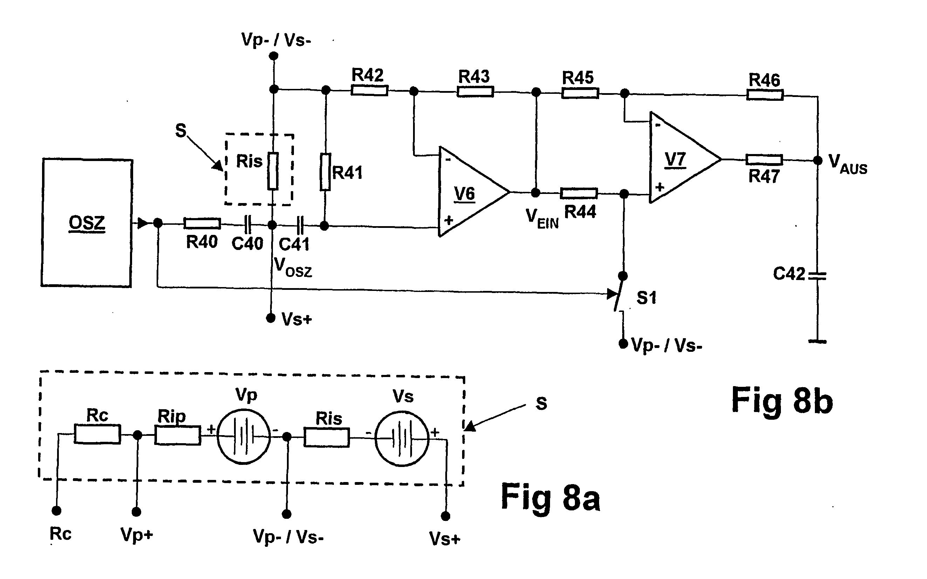

Die Lambdasonde S (deren Ersatzschaltbild in Figur 8a dargestellt ist), in welcher sich der zu messende Innenwiderstand Ris befindet, ist als strichlierter Kasten dargestellt. Der Innenwiderstand Ris ist mit der Mittenspannung Vm = 2.5V verbunden, welche Bezugspotential der Sonde und des nachfolgenden invertierenden Wechselspannungsverstärkers mit einem Verstärkungsfaktor von etwa 10 ist, der aus dem Operationsverstärker V3, den Widerständen R16 bis R18 und dem Kondensator C12 gebildet wird.

Das am Ausgang des Operationsverstärkers V2 erscheinende Oszillatorsignal, ein Wechselstrom mit etwa 500µAss, wird über den Widerstand R15 und den Kondensator C11 in die Sonde eingekoppelt. Am Innenwiderstand Ris fällt dementsprechend eine Wechselspannung ab, welche im Verstärker V3 verstärkt und im nachfolgenden Spitzenwertgleichrichter gleichgerichtet wird, siehe auch Figuren 3 und 4 sowie zugehörige Beschreibung.

Die Nachteile dieser Schaltung wurden bereits eingangs genannt: Verfälschung des Ausgangswertes bei Dachschräge des Rechtecksignals und starke Empfindlichkeit gegenüber EMV-Störimpulsen (Figur 9), bedingt durch das rasche Ansprechen des Gleichrichters.

Erfindungsgemäß werden diese Probleme zufriedenstellend gelöst, indem zur Gleichrichtung ein Synchrondemodulator mit integrierter Siebung verwendet wird.

Da Phase und Frequenz des Meßsignals (Oszillatorsignal) bekannt sind, ist es möglich, eine vom Oszillatorsignal gesteuerte Gleichrichtung vorzunehmen. Dies geschieht beispielsweise mittels eines Verstärkers, dessen Verstärkung zwischen +1 und -1 umschaltbar ist. Erfolgt die Umschaltung im Wechsel der positiven und negativen Amplituden des Oszillatorsignals, so ist die Wirkung eine Gleichrichtung des (oszillatorsynchronen) Eingangssignals V_{EIN}, bezogen auf die Mittenspannung Vm. Die Phasenverschiebung zwischen Oszillatorsignal und Eingangssignal ist dabei vernachlässigbar. Dieses Signal wird anschließend noch gefiltert. Somit erhält man eine Gleichspannung, die dem Mittelwert des positiven Amplitudendachs der Eingangswechselspannung entspricht.

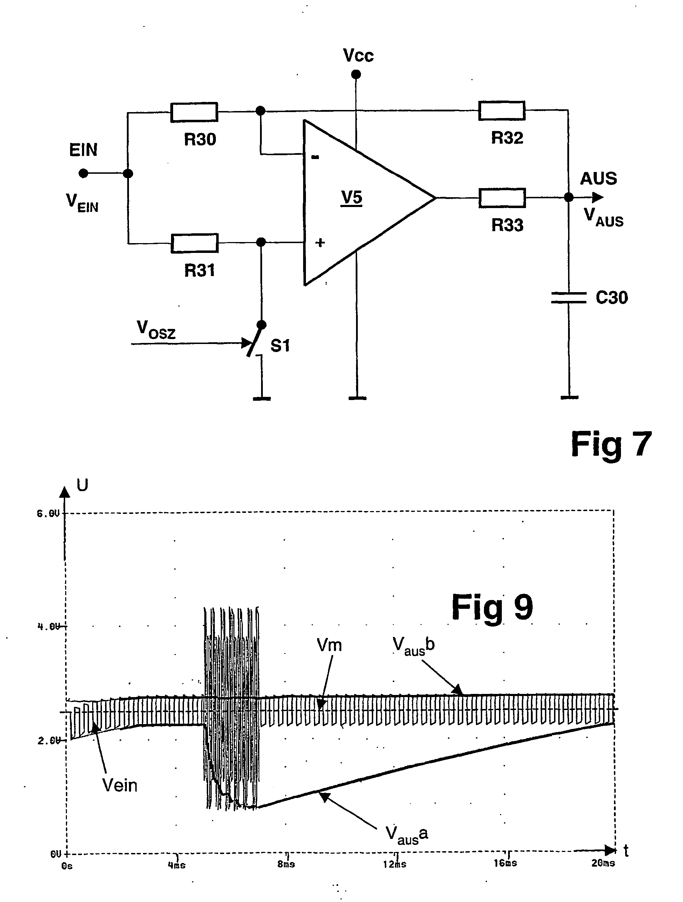

Figur 7 zeigt ein Ausführungsbeispiel eines an sich bekannten Synchrondemodulators, bestehend aus einem Operationsverstärker V5, Widerständen R30 bis R33 und einem Kondensator C30. Zwischen dem nichtinvertierenden Eingang des Operationsverstärkers V5 und dem Bezugspotential (0V) ist ein Schalter angeordnet, welcher vom Oszillatorsignal V_{OSC} betätigt wird. Bei geöffnetem Schalter S1 hat der Operationsverstärker V5 einen Verstärkungsfaktor "+1", bei geschlossenem Schalter S1 "-1". Das Ausgangssignal V_{AUS} am Ausgang AUS der Schaltung folgt dem Ausgangssignal des Verstärkers V5 mit der Filterzeitkonstanten τ = R33*C30 des aus dem Widerstand R33 und dem Kondensator C30 gebildeten Filters, die beispielsweise 30ms beträgt.

Figur 8b zeigt ein Prinzipschaltbild einer erfindungsgemäßen Schaltung zur Ermittlung des Sondeninnenwiderstandes Ris mit einem Synchrondemodulator mit integrierter Siebung.

Zum besseren Verständnis ist in Figur 8a ein Ersatzschaltbild einer Lambdasonde S dargestellt. Sie besteht:
1.) aus einer sog. Referenzzelle, d.h., aus den Elektroden zwischen Meßkammer und Luft, in der Zeichnung dargestellt durch die zwischen den Elektroden meßbare Nernstspannung Vs und den Innenwiderstand Ris der Diffusionsbarriere zwischen ihnen,
2.) aus einer sog. Pumpzelle, d.h., aus den Elektroden zwischen Meßkammer und Abgas, dargestellt durch die zwischen ihnen abfallende Pumpspannung Vp und den (Referenz-)Widerstand Rip zwischen diesen Elektroden, und
3.) aus einem Kalibrierwiderstand Rc im Sondenstecker.

Aus der Lambdasonde S sind der erste bis vierte Anschluß Vs+, Vp-/Vs-, Vp+ und Rc herausgeführt.

In Figur 8b werden die Operationsverstärker V6 und V7 in nicht dargestellter Weise von der Versorgungsspannung Vcc = 5V gespeist. Der Rechteckoszillator OSZ ist als Kasten angedeutet, er kann im Prinzip wie die in Figur 5 dargestellte, um den Operationsverstärker V2 aufgebaute Schaltung mit einer Ausgangsfrequenz von etwa 3kHz ausgebildet sein.

Die Lambdasonde S (Figur 8a), in welcher sich zwischen den Anschlüssen Vs+ und Vp-/Vs- (an welchem die Mittengleichspannung Vm = +2.5V liegt) der zu messende Innenwiderstand Ris befindet, ist als strichlierter Kasten dargestellt.

Das am Ausgang des Rechteckoszillators OSZ erscheinende Oszillatorsignal wird über den Widerstand R40 und den Kondensator C40 als Wechselstrom mit etwa 500µAss in die Sonde eingekoppelt und gleichzeitig dem Schalter S1 zugeführt. Am temperaturabhängigen Innenwiderstand Ris fällt dementsprechend eine Wechselspannung ab, welche in einem nachfolgenden Wechselspannungsverstärker V6, der mit den Widerständen R41 bis R43 und dem Kondensator C41 beschaltet ist, mit einem Verstärkungsfaktor von etwa 10 verstärkt (beispielsweise sei V_{EIN} = 500mVss = ±250mV wie in Figur 4) und in einem auf den Wechselspannungsverstärker V6 folgenden Synchrondemodulator V7, (siehe Figur 7) bestehend aus einem Operationsverstärker V7, Widerständen R44 bis R47 und einem Kondensator, gleichgerichtet (bezogen auf die Mittenspannung Vm) und anschließend durch das Filter aus Widerstand R47 und Kondensator C42 gefiltert wird.

Figur 6 zeigt das an den Eingang EIN des Synchrondemodulators V5 (Figur 7) oder V7 (Figur 8b) angelegte, temperaturabhängige Rechtecksignal V_{EIN} (beispielsweise 500mVss = ±250mV), die der Mittenspannung Vm überlagert ist, mit einer Dachschräge von etwa 10%. Durch den Synchrondemodulator V5 bzw. V7 wird dieses Rechtecksignal synchron mit der Verstärkungsumschaltung gleichgerichtet, d.h., der unterhalb von Vm befindliche Signalanteil wird an der Linie Vm gespiegelt, also nach oben geklappt (gestrichelte Dachschrägen). Das Ausgangssignal des Operationsverstärkers V5 bzw. V7 - die aneinandergereihten Dachschrägen - wird anschließend gefiltert und bildet in Summe mit der Mittenspannung Vm das Ausgangssignal V_{AUS}. das dem oberen Spitzenwert der Eingangsspannung folgt, in Figur 6 dick ausgezogen.

Die erfindungsgemäße Schaltung hat erhebliche Vorteile:
- einfacher, kostengünstiger Aufbau mit Standardkomponenten;
- Unempfindlichkeit gegen Dachschräge des Eingangssignals;
- wesentlich verbesserte Umsetzungsgenauigkeit;
- wesentlich verbesserte Unempfindlichkeit gegenüber EMV-Störimpulsen (siehe Figur 9); und
- zur Integration in Integrierte Schaltkreise geeignet.

Das zeitliche Verhalten der erfindungsgemäßen Vorrichtung zur Messung des Innenwiderstandes Ris einer Lambdasonde gegenüber EMV-Störimpulsen ist im Vergleich zu dem der bekannten Vorrichtung in Figur 9 dargestellt. In einem Diagramm, in dessen Abszissenrichtung die Zeit t und in dessen Ordinatenrichtung Spannungen U aufgetragen sind, ist als strichlierte Gerade die Mitten(gleich)spannung Vm = +2.5V dargestellt. Dieser Mittenspannung Vm ist die temperaturabhängige Eingangsspannung V_{EIN} (beispielsweise 500mVss = ±250mV gemäß Figuren 4 und 6) überlagert. Für eine Dauer von etwa 2ms soll eine EMV-Störspannung von etwa ±2V um die Mittenspannung Vm auftreten und das Verhalten der bekannten und der erfindungsgemäßen Vorrichtung gegenüber dieser EMV-Störspannung aufgezeigt werden.

Gemäß Figuren 3 bis 5 und zugehöriger Beschreibung steht am Ausgang des Spitzengleichrichters V1 bzw. V4 eine (Sägezahn)-Gleichspannung V_{AUS}, die dem unteren Spitzenwert der Eingangsspannung Vm + V_{EIN} folgt. Der Verlauf dieser Spannung V_{AUS} ist in Figur 9 als dick ausgezogene Spannung V_{AUS}a dargestellt. Als Folge des Verhältnisses von 100/1 der Lade- und Entladezeitkonstanten des Spitzengleichrichters folgt dieses Signal auch schnell dem unteren Spitzenwert einer auftretenden EMV-Störspannung, was einen plötzlichen Temperatursprung vortäuscht, erholt sich nach deren Ende jedoch nur sehr langsam, wodurch für eine längere Zeit ein fehlerhaftes Signal, d.h., eine fehlerhafte Sondentemperatur gemessen wird, worauf die Sondenheizung dann fehlerhaft reagiert.

Das Ausgangssignal der erfindungsgemäßen Vorrichtung ist als dick ausgezogene Spannung V_{AUS}b dargestellt. Daraus ist ersichtlich, daß sich der Synchrondemodulator durch plötzlich auftretende EMV-Störspannungen nicht irritieren läßt und insgesamt ein die herrschende Sondentemperatur besser wiedergebendes Ausgangssignal V_{AUS} erzeugt.

## Patentansprüche

1. Vorrichtung zum Messen des Innenwiderstandes (Ris) einer linearen Lambdasonde (S) einer Brennkraftmaschine, mit einem Spannungsverstärker (V6) zur Verstärkung einer am Innenwiderstand (Ris) abfallenden Wechselspannung (V_{OSZ}), die durch einen am ersten Sondenanschluß (Vs+) eingespeisten Wechselstrom hervorgerufen wird, und mit einem Gleichrichter zur Gleichrichtung der verstärkten Wechselspannung (V_{EIN}), wobei der Gleichrichter ein Synchrondemodulator (V7) ist, dessen Spannungsverstärkung mit der Frequenz der am Innenwiderstand (Ris) abfallenden Wechselspannung (V_{OSZ}) zwischen zwei vorgegebenen Werten umschaltbar ist, und dessen Ausgangssignal (V_{AUS}) mittels eines Filters (R47, C42) gesiebt wird, **dadurch gekennzeichnet, dass** der Synchrondemodulator ein Synchrondemodulator (V7) mit integrierter Siebung ist.

2. Vorrichtung nach Anspruch 1, **dadurch gekennzeichnet, daß** zwischen dem nichtinvertierenden Eingang des Synchrondemodulators (V7) und dem zweiten Sondenanschluß (Vp-/Vs-) ein mit der Frequenz der am Innenwiderstand (Ris) abfallenden Wechselspannung (V_{OSZ}) schaltbarer Schalter (S1) angeordnet ist.

3. Vorrichtung nach Anspruch 1, **dadurch gekennzeichnet, daß** die vorgegebenen Werte der Spannungsverstärkung des Synchrondemodulators (V7) die Werte "+1" und "-1" sind.

## Claims

1. Device for measuring the internal resistance (Ris) of a linear lambda probe (S) of an internal combustion engine, having a voltage amplifier (V6) for amplifying an alternating voltage (V_{OSC}) which drops across the internal resistance (Ris) and is brought about by an alternating current applied to the first probe terminal (Vs+), and having a rectifier for rectifying the amplified alternating voltage (V_{IN}), wherein the rectifier is a synchronous demodulator (V7) whose voltage amplification can be switched between two predefined values with the frequency of the alternating voltage (V_{OSC}) which drops across the internal resistance (Ris), and whose output signal (V_{OUT}) is filtered by means of a filter (R47, C42) **characterized in that** the synchronous demodulator is a synchronous demodulator (V7) with integrated filtering means.

2. Device according to Claim 1, **characterized in that** a switch (S1) which can be switched with the frequency of the alternating voltage (V_{OSC}) which drops across the internal resistance (Ris) is arranged between the noninverting input of the synchronous demodulator (V7) and the second probe terminal (Vp-/Vs-).

3. Device according to Claim 1, **characterized in that** the predefined values of the voltage amplification of the synchronous demodulator (V7) of the values "+1" and "-1".

## Revendications

1. Dispositif pour la mesure de la résistance interne (Ris) d'une sonde lambda linéaire (S) d'un moteur à combustion interne, comprenant un amplificateur de tension (V6) destiné à amplifier une tension alternative (V_{OSZ}) qui chute sur la résistance interne (Ris), tension qui est engendrée par un courant alternatif appliqué à la première connexion de sonde (Vs+), et un redresseur destiné au redressement de la tension alternative amplifiée (V_{EIN}), le redresseur étant un démodulateur synchrone (V7) dont l'amplification de tension peut être inversée entre deux valeurs prédéterminées avec la fréquence de la tension alternative (V_{OSZ}) qui chute sur la résistance interne (Ris), et dont le signal de sortie (V_{AUS}) est filtré au moyen d'un filtre (R47, C42), **caractérisé en ce que** le démodulateur synchrone est un démodulateur synchrone (V7) à filtrage intégré.

2. Dispositif selon la revendication 1, **caractérisé en ce qu'**un commutateur (S1) qui peut être commuté à la fréquence de la tension alternative (V_{OSZ}) qui chute sur la résistance interne (Ris) est disposé entre l'entrée non inverseuse du démodulateur synchrone (V7) et la deuxième connexion de sonde (Vp-/Vs-).

3. Dispositif selon la revendication 1, **caractérisé en ce que** les valeurs prédéterminées de l'amplification de tension du démodulateur synchrone (V7) sont les valeurs "+1" et "-1".
